# EUROPEAN PATENT APPLICATION

(11) **EP 4 586 557 A1**
(43) Date of publication of application: **16.07.2025**
(21) Application number: 24151061.9
(22) Date of filing: 09.01.2024
(51) Int. Cl.: H04L 12/413, H04L 12/10, H04L 12/40

(54) **SINGLE-PAIR ETHERNET NETWORK FOR AIRCRAFT CABIN DEVICES**

(71) Applicant: Airbus Operations GmbH, 21129 Hamburg (DE)
(72) Inventor: Weichbrot, Carsten, 21129 Hamburg (DE); Szameit, Jan, 21129 Hamburg (DE); Opitz, Pierre, 211129 Hamburg (DE); Schönherr, Stephan, 21129 Hamburg (DE)

(57) **Abstract**

A data network (100) for aircraft cabin devices includes a network controller (10), and a plurality of cabin device modules (20) connected to the network controller (10) via a plurality of Single-Pair Ethernet, SPE, communication links (E). Each of the plurality of cabin device modules (20) comprises an SPE switch (21) coupled to the network controller (10) via one of the plurality of SPE communication links (E), and at least two module nodes (22; 23; 24; 25) coupled in daisy-chain topology to the SPE switch (21).

## Description

### TECHNICAL FIELD OF THE INVENTION

The invention relates to a data network for aircraft cabin devices relying on Single-Pair Ethernet (SPE) communication. The invention further relates to an aircraft having such a data network and a method for exchanging data between Ethernet nodes in a Single-Pair Ethernet (SPE) network, for example in a cargo hold or a passenger cabin of a transport vehicle, such as a passenger aircraft, a cargo aircraft, a helicopter, a passenger train, a road vehicle, a watercraft such as a ferry or a cruise ship or similar transport machines.

### TECHNICAL BACKGROUND

Ethernet refers to a family of wired computer networking technologies commonly used in communication networks of various dimensions such as local area networks (LAN), metropolitan area networks (MAN) and wide area networks (WAN). Originally standardized under IEEE 802.3, for both the data link layer as well as the physical layer, Ethernet has since been refined to support higher bit rates, a greater number of nodes, and longer link distances, while at the same time essentially retaining all backward compatibility.

On the physical layer, various solutions may be used for the transmission of Ethernet data: Twisted pair cables use four separate copper wires that are twisted in pairs. Each pair is used to transmit data, with two pairs used for transmission and two for reception. Coaxial cables use a central conductor surrounded by a concentric shielding wire and were once commonly used for Ethernet transmission, but have largely been replaced by other solutions. Fibre optic cables enable higher bandwidths and a longer reach than copper cables, facilitating high-speed or long-distance transmissions. Wireless networks based on the WLAN standard are often used for wireless data transmission, offering greater flexibility and mobility, but far less data rate and shakier reliability as compared to cable connections. The Powerline Communication (PLC) protocol uses existing conventional power line to transmit Ethernet data, utilizing the electrical power grid as the transmission medium. Industrial Ethernet is used in certain areas, such as industry, as a special form of Ethernet connection which is particularly robust and fail-safe.

Two new variants of large bandwidth Ethernet over a single twisted pair, known as 10BASE-T1S and 10BASE-T1L, were standardized in IEEE 802.3cg-2019, also known as Single-pair Ethernet (SPE). The document WO 2022/146621 A1 discloses an enhanced lighting control system that utilizes Single-Pair Ethernet (SPE) connection protocols to provide a cost and resource efficient lighting control system allowing for a retrofit installation into existing lighting systems. The document WO 2022/144320 A1 discloses a PoE connection for luminaire controllers in a network in order to allow light controls through the network, for example utilizing Single-Pair Ethernet (SPE) systems with power delivery. The document US 10,998,685 B2 discloses Single-Pair Ethernet (SPE) connector systems.

### SUMMARY OF THE INVENTION

One of the objects of the invention is to find more efficient solutions for providing data communication between network nodes, specifically between aircraft cabin devices interconnected in an Ethernet network.

This and other objects are achieved by means of a data network for aircraft cabin devices having the features of claim 1, an aircraft having the features of claim 7 and a method for exchanging data between Ethernet nodes in a Single-Pair Ethernet (SPE) data network having the features of claim 9.

According to a first aspect of the invention, a data network for aircraft cabin devices comprises a network controller, and a plurality of cabin device modules connected to the network controller via a plurality of Single-Pair Ethernet (SPE) communication links. Each of the plurality of cabin device modules comprises an SPE switch coupled to the network controller via one of the plurality of SPE communication links, and at least two module nodes coupled in daisy-chain topology to the SPE switch.

According to a second aspect of the invention, an aircraft comprises a data network according to the first aspect of the invention.

According to a third aspect of the invention, a method for exchanging data between Ethernet nodes in a Single-Pair Ethernet (SPE) data network involves the steps of connecting a central network controller to a plurality of cabin device modules via a plurality of Single-Pair Ethernet, SPE, communication links, connecting SPE switches of each of the plurality of cabin device modules with at least two module nodes in the respective cabin device module in daisy-chain topology, and bidirectionally exchanging Ethernet data packets between the network controller and the module nodes of the plurality of cabin device modules via the plurality of SPE communication links.

In some embodiments of the first aspect of the invention, the at least two module nodes each comprise a first SPE port, a second SPE port and a third SPE port. In some implementations thereof, the first SPE port and the second SPE port interconnect the module node in the daisy-chain, and the third SPE port is connected to an aircraft cabin unit.

In various embodiments of the first aspect of the invention, the aircraft cabin unit is a lighting device or a lighting fixture.

In a number of embodiments of the first aspect of the invention, the at least two module nodes include at least one of a line replaceable unit, LRU, a passenger service unit, PSU, a galley unit, a lavatory unit and a hatrack.

In several embodiments of the first aspect of the invention, the network controller is configured to implement power over dataline (PoDL) technology to supply power to the plurality of cabin device modules via the SPE communication links.

In some embodiments of the first aspect of the invention, the at least two module nodes each comprise a power management unit connected to the first SPE port and the second SPE port. In some implementations thereof, the power management unit is configured to supply power to the aircraft cabin unit sourced from the SPE communication links.

In several embodiments of the second aspect of the invention, the network controller is located in a server bay of the aircraft and the plurality of cabin device modules are distributed in a passenger cabin of the aircraft.

In a number of embodiments of the third aspect of the invention, the method further comprises a step of supplying power over dataline, PoDL, from the network controller to the plurality of cabin device modules via the SPE communication links.

Advantageous configurations and developments will emerge from the further dependent claims and from the description with reference to the figure. The advantageous configurations and developments may be combined with one another as desired where expedient. Further possible configurations, developments and implementations of the invention also encompass combinations, which are not explicitly mentioned, of features of the invention described above or below with regard to the exemplary embodiments. A person skilled in the art here will in particular also add individual aspects as improvements or additions to the respective basic form of the present invention.

### BRIEF SUMMARY OF THE DRAWINGS

The present invention will be discussed in more detail below on the basis of the exemplary embodiments shown in the schematic figures. In the figures:
Fig. 1 depicts an aircraft having a Single-Pair Ethernet (SPE) data network according to some embodiments of the invention.
Fig. 2 illustrates a block diagram of a cabin device module employed in a Single-Pair Ethernet (SPE) data network used for interconnecting aircraft cabin devices according to some embodiments of the invention.
Fig. 3 illustrates a block diagram of a daisy-chained module node in the Single-Pair Ethernet (SPE) network of Fig. 1 according to some embodiments of the invention.
Fig. 4 shows a schematic flowchart of the steps of a method for exchanging data between Ethernet nodes in a Single-Pair Ethernet (SPE) network according to some embodiments of the invention.

The appended figures are intended to provide improved understanding of the embodiments of the invention. They illustrate embodiments and serve, in conjunction with the description, for the explanation of principles and concepts of the invention. Other embodiments, and many of the stated advantages, will emerge with regard to the drawings. The elements of the drawings are not necessarily shown true to scale relative to one another. Direction-indicating terminology such as, for instance, "top", "bottom" "left", "right", "above" "below", "horizontal", "vertical", "front", "rear" and similar indications are used only for explanatory purposes and do not serve to restrict the generality to specific configurations as shown in the figures.

In the figures of the drawing, elements, features and components that are identical, functionally identical and of identical action are denoted in each case by the same reference signs unless stated otherwise.

### DESCRIPTION OF EXEMPLARY EMBODIMENTS

The following examples and embodiments are described in the context of passenger aircraft, however, it should be noted that analogous consideration apply with respect to data networks of network nodes in other transport vehicles, such as, but not limited to, cargo aircraft, helicopters, passenger trains, road vehicles, watercraft or similar transport machines.

According to the Open Systems Interconnection model (OSI model), Ethernet-based computer networking technologies use baseband transmission (i.e., electrical signals as discrete electrical pulses) to transmit data packets and ultimately messages that are communicated among network devices. According to the OSI model, specialized circuitry called a physical layer (PHY) device or controller is used to interface between an analog domain of a line and a digital domain of a data link layer (or just "link layer") that operates according to packet signaling. While a data link layer may include one or more sublayers, in Ethernet-based computer networking, a data link layer typically includes at least a media access control (MAC) layer that provides control abstraction of the physical layer. By way of example, when transmitting data to another device on a network, a MAC controller may prepare frames for the physical medium, add error correction elements, and implement collision avoidance. Further, when receiving data from another device, a MAC controller may ensure integrity of received data and prepare frames for higher layers.

Single-Pair Ethernet (SPE) technology is a recent standard using single-pair Ethernet cables to transmit data at speeds ranging up to 1 Gbps over distances of few tens of metres and simultaneously ensure the power supply to terminal equipment or devices using the PoDL (Power over Data Line) technology or the SPoE (Single-Pair Power over Ethernet) technology, unlike the conventional LAN networks which use 4-pair LAN cables and conventional RJ45 connectors.

SPE technology is specified by the Institute of Electrical and Electronics Engineers (IEEE) 802.3cg standard as 10BASE-T1L or 10BASE-T1S. SPE may be utilized to replace and update existing proprietary wiring/protocols with an interface that provides forms of both power and data transmission (e.g., Ethernet). A single pair of conductors (in contrast to two pairs or four pairs of conductors for traditional Ethernet) reduces the cost of cabling and installation. For 10BASE-T1L, a data rate of 10 Mbps may be achieved for bus lengths up to a kilometre. Alternatively, 10BASE-T1S provides for multidrop configurations up to eight nodes but is limited to 25 meters of total bus length and does not include power delivery.

In general, SPE offers a range of functions and benefits in aircraft: SPE requires only a single cable connection for data transmission, compared to conventional Ethernet solutions that require two or more pairs of copper wires. This enables a reduction in weight and saves space in the aircraft. SPE supports higher data transmission rates compared to conventional copper cables. This enables faster and more reliable data communication between the various systems on board the aircraft. SPE can be easily installed over existing cable infrastructures, reducing the cost and effort of cabling. In addition, existing connectors and sockets can continue to be used, thereby improving downwards compatibility. SPE is less susceptible to electromagnetic interference than conventional Ethernet solutions. This is particularly important in the aviation industry, as aircraft can be affected by other electronic systems on the ground and in the aircraft itself due to the high level of electromagnetic interference. SPE enables simple fault detection and diagnostics, as most line faults can be found by simple tests. This leads to improved maintenance efficiency and faster troubleshooting.

In order to ensure compatibility with future technologies, SPE is part of the global trend towards miniaturization and digital networking of devices. It enables seamless integration of future technologies and devices on board of aircraft without the need for major changes to the cabling infrastructure. Overall, SPE on board of an aircraft may offer efficient, reliable and cost-effective solutions for data communication between various electronic devices and systems in the cabin and/or in the cargo hold.

Additionally, SPE enables integrated power supply over the same line as the data transmission: PoDL is the abbreviation for Power over Data Line, adopted by IEEE in the 2016 standard 802.3bu. PoDL allows devices to be supplied with power via an SPE connection in parallel with data transmission. PoDL is intended for 100BASE-T1 and 1000BASE-T1 connections and is not compatible with the PoE standards 802.3af, 802.3at or 802.3bt (PoE, PoE+, PoE++). While the PoE standards use at least two or even four wire pairs, 802.3bu allows the transmission of electrical energy via just a single wire pair.

PoDL distinguishes between Power Sourcing Equipment (PSE), which is responsible for the energy supply, and the Powered Device (PD), which uses the supplied energy. A total of ten different power classes are defined in the 802.3bu standard. On the PD side, they range from a power consumption of 0.5 W to 50 W. The voltages are between 6 V and 60 V, with currents between 100 mA and 1,360 mA, transported over two-core cables in accordance with IEC 61156. PoDL is therefore beneficial for supporting centralized power supply in highly branched networks, such as on board of aircraft, in order to supply various cabin and/or cargo hold equipment with power, such as for example LED lighting, actuators, sensors, or control units.

PoDL is easily enabled using a switchless SPE daisy-chain topology with T1 Ethernet communication links and power supply via T1 Ethernet. Such a configuration at a daisy-chained node may provide up to several hundred Watts of power to local load such as for example luminaires or lighting devices. System-building may be done by daisy-chaining similarly equipped and implemented devices that communicate with a host controller, for example a PLC. The local nodes may be designed to support any Ethernet protocol so that communication between any two network nodes is possible via conventional Ethernet as desired.

Power is then delivered to the first node in the daisy-chain via the T1 Ethernet connection, which in turn powers the following node daisy-chained downstream the first node, and so on. The overall power level is generally available to all nodes in the chain, with the operator of the network being able to configure the power consumption of the individual nodes in the design phase. As needed and desired, power may be split between all of the nodes in the chain, with each node being assigned an adjustable limit value for the power used locally facilitating a dynamic load sharing policy. Thereby, the overall system does not fail if a local overload eventually occurs from a faulty device or a temporary shutdown of a local application.

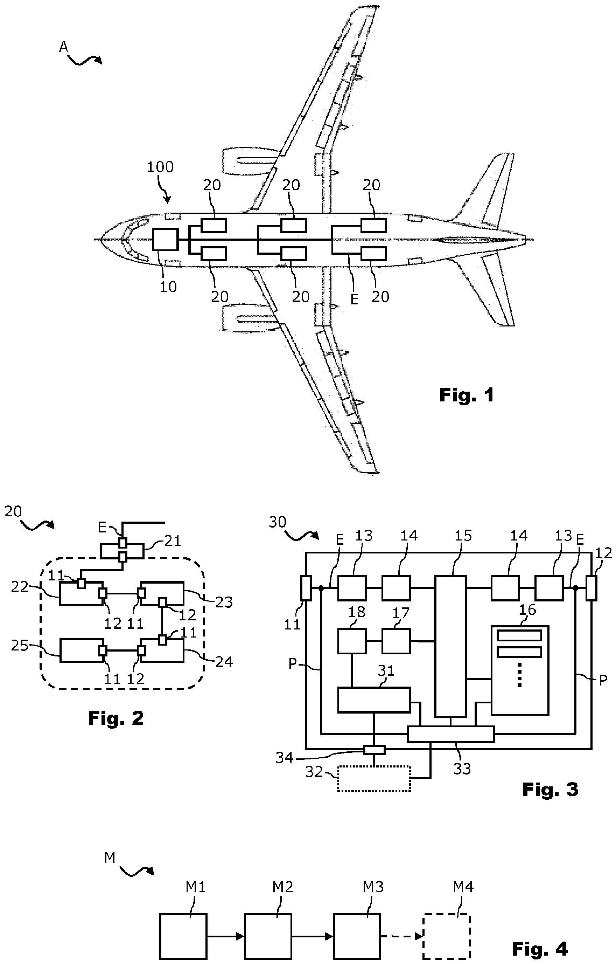

Fig. 1 depicts an aircraft A having a Single-Pair Ethernet (SPE) data network 100 with a number of connected cabin device modules 20 connected to a central network controller 10 via SPE data links E. The aircraft A may for example be a passenger aircraft or a cargo aircraft, and the SPE data network 100 may be implemented in a passenger cabin and/or a cargo hold of the aircraft A. Exemplarily, a number of four connected cabin device modules 20 is shown in Fig. 1, however, it should be understood that the data network 100 is in principle scalable so that any number of connected cabin device modules 20 may be implemented in the aircraft A. For example, the network controller may be located in a server bay of the aircraft A. The cabin device modules 20 may in turn be distributed in a passenger cabin of the aircraft A, for example in the vicinity of each row of seats. Other cabin device modules 20 may be located in the galley area, in the lavatory area or in other functional areas of the aircraft A.

The central network controller 10 is connected via individual SPE data links E to each of the connected cabin device modules 20. The SPE data links E may facilitate bidirectional data transfer to and from the connected cabin device modules 20.

Moreover, in some implementations, the SPE data links E may be configured for power over dataline (PoDL) technology in order to provide power to the connected cabin device modules 20 over the SPE data links E.

Fig. 2 illustrates a block diagram of a cabin device module 20 employed in a Single-Pair Ethernet (SPE) data network used for interconnecting aircraft cabin devices. The cabin device module 20 may for example be utilized in the SPE data network 100 as illustrated in and explained in conjunction with Fig. 1.

The cabin device module 20 includes an SPE switch 21 that is coupled to the network controller 10 via one of the plurality of SPE communication links E. The SPE switch 21 is in turn coupled to a number of module nodes of the cabin device module 20. For example, and as exemplarily shown in Fig. 2, four module nodes 22, 23, 24 and 25 are coupled in daisy-chain topology to the SPE switch 21, i.e. a first module node 22 has a first SPE port 11 that is coupled to the SPE switch 21. A second SPE port 12 of the first module node 22 is coupled to a first SPE port 11 of a second module node 23. A second SPE port 12 of the second module node 23 is coupled to a first SPE port 11 of a third module node 24. A second SPE port 12 of the third module node 24 is coupled to a first SPE port 11 of a fourth module node 25.

The number of module nodes 22, 23, 24 and 25 is not limited to four, as exemplarily illustrated in Fig. 2, but may be more or less than four in other implementations.

In some instances, the network controller 10 may be configured to implement power over dataline, PoDL, technology to supply power to the plurality of cabin device modules 20 via the SPE communication links E.

Fig. 3 illustrates a block diagram of a daisy-chained module node 30 in the Single-Pair Ethernet (SPE) network 100 of Fig. 1. The depicted daisy-chained module node 30 may be employed as each of the nodes 22, 23, 24, and 25 as illustrated in Fig. 2. For example, the module node 30 may be a line replaceable unit (LRU), a passenger service unit (PSU), a galley unit, a lavatory unit or a hatrack.

The daisy-chain of module nodes 30 (or module nodes 22, 23, 24, and 25 in Fig. 2) may be devoid of loops or redundant paths. However, it may be possible for the daisy-chained module nodes 30 (or module nodes 22, 23, 24, and 25 in Fig. 2) to implement the Spanning Tree Protocol (STP) in order to address routing issues with redundant paths and to assist in correct data forwarding. This may allow for a robust SPE network to be implemented due to being able to create redundant pathways for the Ethernet communication links E. Such redundant pathways may only have one active path at a time, but may provide for backup in case of disconnections or other path faults occurring. STP at node level additionally enables fast reconfiguration of internode communication links.

The module node 30 includes a first SPE port 11 for providing a first Ethernet ingress/egress. To that end, the module node 30 includes a first PHY interface 13 coupled to a downstream first MAC interface 14. The module node 30 further includes a second SPE port 12 for providing a second Ethernet ingress/egress. To that end, the module node 30 includes a second PHY interface 13 coupled to a downstream second MAC interface 14. Both of the MAC interfaces 14 are coupled to a switch engine 15 which is responsible for tagging Ethernet packets, prioritizing packet flow, packet filtering and general packet processing such as FIFO buffering or similar. An engine management device 16 is coupled to the switch engine 15 and is configured to provide basic Ethernet functionalities to the switch engine 15, such as - without limitation of generality - MiB counters, queue management, configuration lookup tables, frame buffer management and external memory interfacing.

A third SPE port 34 is included in the module node 30 in order to bidirectionally exchange data and control signals with aircraft cabin unit 32, such as for example a lighting device or a lighting fixture. To that end, the module node 30 includes a third PHY interface 18 coupled to a downstream third MAC interface 17 which in turn is connected to the switch engine 15. Ethernet packets delivered via the first and/or second SPE ports 11 and 12, respectively, are processed in a module node processor 31 and forwarded to the aircraft cabin unit 32 via the third SPE port 34.

The module node 30 may be configured for power over dataline (PoDL) technology by including a power management unit 33 that is connected to the first SPE port 11 and the second SPE port 12 via power supply lines P. The power management unit 33 is configured to supply power to the aircraft cabin unit 32 (and eventually other electrically powered elements in the module node 30, such as the switch engine 15, the engine management device 16, and/or the module node processor 31). The power supply for the power supply lines P is sourced over the SPE communication links E.

Fig. 4 shows a schematic flowchart of the steps of a method M for exchanging data between Ethernet nodes in a Single-Pair Ethernet (SPE) data network. The method M may be employed to operate an SPE data network 100 as illustrated in and explained in conjunction with Figs. 1 to 3. Particularly, the method M may be employed on board of an aircraft, such as the aircraft A as illustrated in and explained in conjunction with Fig. 1.

In a first step M1, a central network controller 10 is connected to a plurality of cabin device modules 20 via a plurality of SPE communication links E. The SPE communication links E may be established by single-pair Ethernet cables. In a second step M2, SPE switches 21 of each of the plurality of cabin device modules 20 are connected with at least two module nodes, for example the module nodes 22, 23, 24, and 25 as depicted in Fig. 2 or a number of module nodes 30 as depicted in Fig. 3, in the respective cabin device module 20 in daisy-chain topology. In a third step M3, Ethernet data packets are exchanged bidirectionally between the network controller 10 and the module nodes of the plurality of cabin device modules 20 via the plurality of SPE communication links E.

Optionally, a fourth step M4 may involve supplying power over dataline, PoDL, from the network controller 10 to the plurality of cabin device modules 20 via the SPE communication links E.

Summarizing the above, the application of SPE in a data network on board of an aircraft advantageously utilizes the high bandwidths and data rates to achieve several benefits:
First, the power consumption of aircraft lighting devices and luminaires differs during the course of a flight and may have different underlying requirements in each flight phase (e.g. boarding, disembarking, take off, cruise, landing, etc.). In order to optimize the efficiency of the aircraft power systems it is useful to know the current power consumption status of each of the aircraft's lighting devices and luminaires at each point in time. By reporting back data from the lighting devices and luminaires via the Ethernet communication links, overall power consumption may be advantageously reduced due to the ability to implement efficient power balancing means depending on the local power consumption situation. For example, when larger loads such as galley ovens or actuators are currently active, power consumption for other loads, for example for lighting, may be temporarily reduced.
Secondly, intermittent health status messages may be exchanged via the Ethernet network in order to monitor degradation and/or failures of light fixtures to support maintenance activities.

Finally, new light units with individually controllable sub-segments or even new light unit types like LED arrays or displays generally require higher bandwidths from the controlling cabin management system. SPE networks enable transfer of larger amounts of data required by such new light units without increasing the weight burden on the cabling of the aircraft and/or disadvantageously increasing latency values needed for smoothly operating lighting applications.

In order to improve the stringency of the representation, various features were combined in one or more examples in the detailed description above. However, it should be clear in this case that the description above is only of an illustrative and in no way restrictive nature. It is used to cover all alternatives, modifications and equivalents of the various features and exemplary embodiments. Many other examples will be immediately and directly clear to a person skilled in the art on the basis of his technical knowledge in view of the description above.

The exemplary embodiments were chosen and described in order to be able to represent the principles on which the invention is based and their possible uses in practice in the best possible manner. As a result, experts may optimally modify and use the invention and its various exemplary embodiments for the intended purpose. In the claims and the description, the terms "containing" and "having" are used as neutral concepts for the corresponding term "comprising". Furthermore, use of the terms "a", "an" and "one" is not intended to fundamentally exclude a plurality of features and components described in such a way.

## Claims

1. Data network (100) for aircraft cabin devices, the data network (100) comprising:
a network controller (10); and
a plurality of cabin device modules (20) connected to the network controller (10) via a plurality of Single-Pair Ethernet, SPE, communication links (E), each of the plurality of cabin device modules (20) comprising:
an SPE switch (21) coupled to the network controller (10) via one of the plurality of SPE communication links (E); and
at least two module nodes (22; 23; 24; 25) coupled in daisy-chain topology to the SPE switch (21).

2. Data network (100) according to claim 1, wherein the at least two module nodes (22; 23; 24; 25) each comprise a first SPE port (11), a second SPE port (12) and a third SPE port (34), the first SPE port (11) and the second SPE port (12) interconnecting the module node in the daisy-chain, and the third SPE port (34) being connected to an aircraft cabin unit (32).

3. Data network (100) according to claim 2, wherein the aircraft cabin unit (32) is a lighting device or a lighting fixture.

4. Data network (100) according to claim 3, wherein the at least two module nodes (22; 23; 24; 25) include at least one of a line replaceable unit, LRU, a passenger service unit, PSU, a galley unit, a lavatory unit and a hatrack.

5. Data network (100) according to one of claims 2 to 4, wherein the network controller (10) is configured to implement power over dataline, PoDL, technology to supply power to the plurality of cabin device modules (20) via the SPE communication links (E).

6. Data network (100) according to claim 5, wherein the at least two module nodes (22; 23; 24; 25) each comprise a power management unit (33) connected to the first SPE port (11) and the second SPE port (12), the power management unit (33) being configured to supply power to the aircraft cabin unit (32) sourced from the SPE communication links (E).

7. Aircraft (A), comprising a data network (100) according to one of claims 1 to 6.

8. Aircraft (A) according to claim 7, wherein the network controller (10) is located in a server bay of the aircraft (A) and the plurality of cabin device modules (20) are distributed in a passenger cabin of the aircraft.

9. Method (M) for exchanging data between Ethernet nodes in a Single-Pair Ethernet, SPE, data network (100), the method (M) comprising:
connecting (M1) a central network controller (10) to a plurality of cabin device modules (20) via a plurality of Single-Pair Ethernet, SPE, communication links (E);
connecting (M2) SPE switches (21) of each of the plurality of cabin device modules (20) with at least two module nodes (22; 23; 24; 25) in the respective cabin device module (20) in daisy-chain topology; and
bidirectionally exchanging (M3) Ethernet data packets between the network controller (10) and the module nodes (22; 23; 24; 25) of the plurality of cabin device modules (20) via the plurality of SPE communication links (E).

10. Method (M) according to claim 9, further comprising:
supplying (M4) power over dataline, PoDL, from the network controller (10) to the plurality of cabin device modules (20) via the SPE communication links (E).
